# EUROPEAN PATENT APPLICATION

(11) **EP 4 513 318 A1**
(43) Date of publication of application: **26.02.2025**
(21) Application number: 24178525.2
(22) Date of filing: 28.05.2024
(51) Int. Cl.: G06F 3/06

(54) **METHOD AND APPARATUS FOR POOLING BLOCK-LEVEL STORAGE VOLUMES IN A CLOUD COMPUTING ENVIRONMENT**

(71) Applicant: Simplyblock GmbH, 14513 Teltow (DE)
(72) Inventor: SCHMIDT, Michael, 3580 Horn (AT)
(74) Representative: 2SPL Patentanwälte PartG mbB

(57) **Abstract**

Provided is a method for pooling block-level storage volumes in a third-party cloud computing environment. The method comprises generating a virtual storage volume based on a plurality of block-level storage volumes by representing the generated virtual storage volume as a singular block-level storage volume to an operating system of at least one computing instance in the cloud computing environment. The method further comprises providing the at least one computing instance access to the generated virtual storage volume via a storage interface protocol.

## Description

### Field

The present disclosure relates to a method for pooling block-level storage volumes in a cloud computing environment and to an apparatus for pooling block-level storage volumes in a cloud computing environment device as set out in the appended set of claims.

### Background

Cloud computing has changed the way how many organizations and individuals manage their IT resources, offering a shift from physical infrastructures to virtualized environments that provide scalable and flexible access to computing power and storage. This transition enables businesses to rapidly adapt to fluctuating demands and innovate at a faster pace, without the significant capital expenditures and maintenance burdens associated with on-premises hardware. Despite these advantages, companies transitioning to cloud providers often face challenges, particularly in the realm of cloud storage. While cloud-based block storage volumes are more reliable than local storage attached to cloud servers, they are also linked to much higher costs and limitations. One issue is limitations imposed on Input/Output Operations Per Second and access latency, which may severely restrict data throughput and increase access latency and negatively impact the performance of applications that depend on quick data access. Therefore, cloud users cannot get the storage performance required for the most demanding applications without compromising the reliability of block storage volumes, with issues surrounding data durability and availability posing significant risks to business continuity and data integrity. Therefore, an improved cloud storage may be desirable.

### Summary

Some aspects of the present disclosure relate to a method for pooling block-level storage volumes in third-party a cloud computing environment comprising generating a virtual storage volume based on a plurality of block-level storage volumes by representing the generated virtual storage volume as a singular block-level storage volume to an operating system of at least one computing instance in the cloud computing environment, providing the at least one computing instance access to the generated virtual storage volume via a storage interface protocol.

Some aspects of the present disclosure relate to an apparatus for pooling block-level storage volumes in a cloud computing environment comprising processor circuitry configured to generate a virtual storage volume based on a plurality of block-level storage volumes by representing the generated virtual storage volume as a singular block-level storage volume to an operating system of at least one computing instance in the cloud computing environment, provide the at least one computing instance access to the generated virtual storage volume via a storage interface protocol.

Further aspects are set out in the appended set of claims.

### Brief description of the Figures

Some examples of apparatuses and/or methods will be described in the following by way of example only, and with reference to the accompanying figures, in which
Fig. 1 illustrates a flowchart of an example of a method for pooling block-level storage volumes in a cloud computing environment;
Fig. 2 illustrates a block diagram of an example of an apparatus for pooling block-level storage volumes in a cloud computing environment;
Fig. 3 illustrates an example of a block diagram of a virtual storage volume pooling block-level storage volumes in a cloud computing environment;
Fig. 4 illustrates a first example of a virtual storage volume pooling block-level storage volumes in a cloud computing environment;
Fig. 5 illustrates a second example of a virtual storage volume pooling block-level storage volumes in a cloud computing environment;
Fig. 6 illustrates a third example of a virtual storage volume pooling block-level storage volumes in a cloud computing environment; and
Fig. 7 illustrates a fourth example of a virtual storage volume pooling block-level storage volumes in a cloud computing environment;

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures, same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

As described above, within major (hyperscaler) cloud environments several challenges with regards to trade-offs between (free) IOPS limits, storage reliability, data security, read access latency and the like may arise, as those characteristics may be mutually exclusive.

In previous approaches, some of these challenges were confronted by customers using networked block storage services in combination with storage devices physically being locally attached to computing instances. Replications may have been implemented on higher levels of abstraction above storage (typically on the level of the database or the file system) to increase the degree of data protection. To increase or workaround a given IOPS limits and costs, complicated custom solutions (such as splitting traffic between many block storage volumes) may have been engineered.

The present disclosure presents a method and an apparatus for pooling block-level storage volumes in a cloud computing environment. The resulting virtual storage volume is implemented within a software container with direct access to underlying virtual hardware, particularly the PCIe bus and NVME devices, including the use of DMA (direct memory access), and using a high-performance, highly scalable distributed data placement algorithm and high-performance erasure coding and is connected to a computing instance via a storage interface protocol (such as Non-Volatile Memory Express (NVMe) protocol).

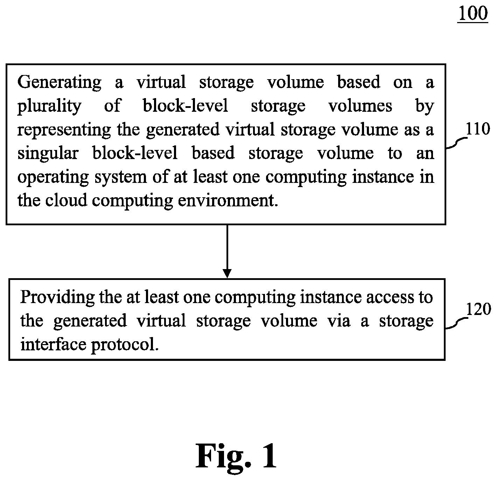

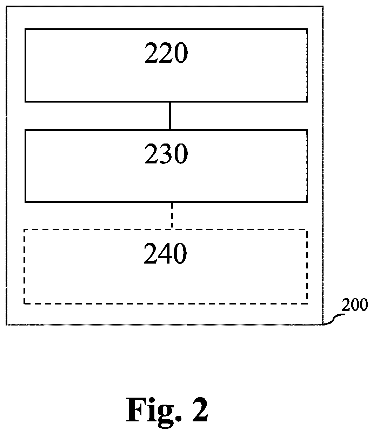

Fig. 1 illustrates a flowchart of an example of a method 100 for pooling block-level storage volumes in a third-party cloud computing environment. The method 100 may, for instance, be performed by an apparatus as described herein, such as apparatus 200 (see Fig. 2 below). The method of pooling the block-level storage volumes as described below may be performed on a different and separate logical layer and/or by a different (physical and/or logical) entity than the operation of the cloud computing environment, i.e. the cloud computing environment is operated by a third-party. The method 100 comprises generating 110 a virtual storage volume based on a plurality of block-level storage volumes by representing the virtual storage volume as a singular block-level storage volume to an operating system of at least one computing instance in the cloud computing environment.

The virtual storage volume may be a logical abstraction over the plurality of block-level storage volumes. The virtual storage volume is presented as a unified controllable entity (i.e., as one singular storage volume) to the operating system of the at least one computing instance. In other words, the plurality of the block-level storage volumes is pooled together into the singular virtual storage volume which is presented as a unified virtual storage volume to the operating system and its applications, despite possibly spanning multiple different storage volumes.

A block-level storage volume of the plurality of block-level storage volumes may be a distinct unit of storage which may be independently accessible and manageable by the operating system. In some examples, a block-level storage volume of the plurality of block-level storage volumes may be a physical storage device such as a hard disk drive or solid-state drive residing on the same computing instance or on multiple computing instances, which are connected by a local computer network and comprising the entire storage capacity of the device. In some examples, a block-level storage volume may be a segment (also referred to as partition) of a physical storage device, which was divided into separate segments with each segment functioning as an independent storage volume. In some examples a block-level storage volume of the plurality of block-level storage volumes may be a virtual storage volume. As described above, the generated virtual storage volume may be a logical abstraction over one or more storage volumes, which is presented as one unified entity to operating system. That is, a block-level storage volume of the plurality of block-level storage volumes may be a logical abstraction comprising one or more physical hardware storage devices. In some examples, a block-level storage volume of the plurality of block-level storage volumes may be a cloud storage volume. A cloud storage volume may be a specific type of a virtual storage volume. A cloud storage volume may be an independently accessible and manageable virtual storage volume provided by a cloud service provider, which is logically abstracted from underlying one or more physical storage devices. The physical storage devices may be located on different physical servers and storage systems within the same data center or server farms. The cloud storage volume may be managed by the cloud service provider. For example, the cloud storage volume, may be a block-level cloud storage volume. In some examples the plurality of block-level storage volumes may comprise a combination of the above described examples.

The plurality of block-level storage volumes may exhibit different storage performance metrics. Storage performance metrics may comprise storage capacity, throughput, IOPS (Input/Output Operations Per Second), latency, and reliability. Storage capacity may refer to the total amount of data a storage system can hold, usually measured in gigabytes (GB) or terabytes (TB). Throughput may refer to the rate at which data can be read from or written to the storage volume, typically measured in megabytes per second (MB/s) or gigabytes per second (GB/s) and reflects the overall data transfer speed. IOPS may measure the number of individual read or write operations a device can perform in one second, providing a key indicator of performance for random small data transfers. Latency (read and/or write latency) may refer to the time delay experienced between the initiation of a read or write request for data and the receipt of the corresponding response within a system, encompassing factors such as processing time, network transmission time, and data access time, crucially impacting system performance and responsiveness. Reliability may assess the likelihood of a storage system to function without failure over a specified period. It can be split into data durability (protection from loss of data per time and capacity unit) and availability, the latter of which is often expressed through the combined metrics of mean time between failures (MTBF) and mean time to repair (MTTR).

The block-level aspect in the block-level storage volume may refer to a storage volume which organizes its storage space on a logical level as comprising a plurality of fixed-sized blocks. The block-level storage volume may be accessed by the operating system or by an application at the level of the fixed-sized blocks. These fixed-sized blocks may be managed by the underlying operating system or by the storage subsystem, providing a foundational layer for data storage and retrieval to/from the storage volume. For example, a block-level cloud storage volume may organize data read/write operations at the block level within a virtualized environment. This may comprise dividing the storage volume into fixed-size blocks and managing them through an abstraction layer provided by virtualization or cloud management software. This approach may offer flexibility, scalability, and efficient data management in cloud-based storage systems.

In some examples, the generated virtual storage volume may be a block-layer virtual storage volume. In some examples, the blocks of plurality of block-level storage volumes may be pooled together into the virtual storage volume as they were originally organized by their storage controller (for example the operating system managing them). In some examples, the blocks of the plurality of block-level storage volumes may be resized and/or re-organized when generating the virtual storage volume.

The cloud computing environment may be a type of network architecture where computing resources (such as servers, storage devices, and networking equipment), are hosted remotely and delivered as services over the internet by a cloud provider. This environment typically involves abstracting and virtualizing physical hardware resources to create one or more computing instances. Each instance can be controlled and utilized independently by users. Users interact with these computing instances through their client devices (such as PCs, web browsers, or smartphones) enabling them to execute tasks, manage data, and access software applications. The logical layers on which the cloud computing environment is operated, and the block-level storage volumes are pooled (i.e., generation of the virtual storage volume and providing the storge volume to the computing instance) as described herein may be separated and completely distinct. For example, the logical layer on which the third-party cloud computing environment is operated does not have any access to the logical layer on pooling of the block-level storage volumes are pooled and vice versa. In some examples, the pooling of the block-level storage volumes is performed by another entity than the operating of the third-party cloud computing environment.

In some examples, the method 100 may further comprise obtaining the plurality of block-level storage volumes and/or the at least one computing instance provisioned by the third party cloud computing environment. The pooling of the block-level storage volumes may be performed on a separate logical layer than that on which the cloud computing environment is operated and/or the pooling of the block-level storage volumes may be performed by a separate (physical or logical) entity than that which operates the cloud computing environment. A logical entity may refer to a virtual or physical unit within a system, designed to manage resources and operations independently, configured so that different logical entities may not have direct access to each other. The plurality of block-level storage volumes and/or the at least one computing instance are set-up and managed by the third-party cloud computing environment (for instance by a cloud service provider) and therefore provisioned to the logical/physical entity performing the pooling of the block-level storage volumes as described herein. Therefore, the plurality of block-level storage volumes and/or the at least one computing instance are obtained by logical/physical entity (for example the apparatus 200) which generates the virtual storage volume. Obtaining the plurality of block-level storage volumes and/or the at least one computing instance provisioned by the third-party cloud computing environment may refer to obtaining access to the already set-up and configured plurality of block-level storage volumes and/or the at least one computing instance. Therefore, no changes to the existing infrastructure provisioned by the third-party cloud computing environment (such as the block-level storage volumes and/or the at least one computing instance) are required. Therefore, the above described method may be operated as a out-of-the-box solution on a plurality of different third-party cloud computing environments (including hyperscalers) and without requiring any changes to the existing infrastructure or requiring any specific set-up of the provisioned infrastructure.

The computing instance may refer a virtual unit of computational resources allocated within a cloud environment. These resources, such as processing power, memory and/or storage capacity or the like, may be abstracted from a larger pool of shared physical resources managed by the cloud provider. Each computing instance may operate independently, running its own operating system and applications, akin to how a standalone computer works.

In some examples, the at least one computing instance may be a virtual machine (VM). A VM may refer to a virtual emulation of a physical computer that runs an operating system and applications, isolated from other virtual machines on the same physical hardware. In some examples, the virtual machine may be a virtual server. A virtual server may be a virtual machine, that is configured to serve network services or run server-based applications. For example, the virtual machine may be a cloud virtual server which may be a specialized virtual server configured primarily for handling large volumes of data storage in a cloud environment. The one or more VMs may be managed and controlled by a hypervisor (also referred to as virtual machine monitor), which may be a software layer that creates and manages virtual machines by abstracting the underlying physical hardware resources to provide virtual operating environments for them.

In another example, the at least one computing instance may be a container. A container may refer to lightweight, standalone, executable package of software that encapsulates its code, runtime, system tools, libraries, and settings in a virtualized environment, enabling consistent and efficient deployment across various cloud computing platforms. Unlike a VM which runs a full operating system kernel, a container may share the host operating system kernel and may only include the necessary libraries and binaries to execute the application.

In some examples, the virtual storage volume may be realized within and exposed by a user-level process running within a container. In an operating system, a process may be categorized into two main types: kernel processes and user processes. Kernel processes operate within the kernel address space, and may have full access to the hardware, manage critical system functions etc. User processes may run in a user address space with limited system privileges. The virtual storage volume may be generated as a software process that runs within the user space of the operating system, separate from the core system operations managed by the kernel and encapsulated within the container's isolated runtime environment. By encapsulating the virtual storage volume within a container as a user-level process, it becomes highly portable and can be deployed consistently across different computing environments. The containerization ensures isolation and eliminates dependencies on specific host systems, enhancing compatibility and ease of deployment. Additionally, running the virtual storage volume as a user-level process enables efficient resource utilization and scalability, as containers are lightweight and can be quickly instantiated or scaled up as needed. At the same time, the particular implementation used allows the user space process exposing the virtual storage volume direct access to the underlying physical or virtual storage device or devices and the PCIe bus, which is used to transfer data between the devices and the main memory of the computing instance.

The method 100 further comprises 120 providing the at least one computing instance access to the virtual storage volume via a storage interface protocol. The storage interface protocol may refer to set of rules and standards that enable the at least one computing instance within a cloud computing environment to access and interact with the virtual storage volume. For example, the storage interface protocol may facilitate the communication between the computing instance (for example the VM) and the generated virtual storage volume. That is the generated virtual storage volume is represented to the computing instance (that is to the operating system of the computing instance, for example the VM) as a singular, cohesive block-level storage volume, and the communication between this singular block-level storage volume and the computing instance is organized by the storage interface protocol. This allows the computing instance (that is the operating system and applications) to access and manage the generated virtual storage volume through an established standard storage interface protocol, as if it were directly connected physical storage, enhancing efficiency and integration in the cloud environment. In other words, the generated virtual storage volume provides an interface to the computing instance which, for example, simulates the interface of a physical storage device.

In some examples, the generated virtual storage volume may comprise a control plane and a data plane. The data plane (also referred to as storage plane) may pool the plurality of block-level storage volumes. For example, the data plane may pool the plurality of block-level storage residing on or connected to a particular virtual server. The virtual server may be a specialized virtual server configured primarily for handling large volumes of data storage and optimized for data-intensive operations with enhanced I/O throughput and network connectivity. Therefore, the virtual server may be turned into a storage node in a storage cluster. The storage nodes may provide both the storage capacity and the compute capacity and network required the operation of the control plane. The control plane may provide the at least one computing instance access to the generated virtual storage volume via the storage interface protocol. Further, the control plane may organize multiple storage nodes in a cluster to connect the generated virtual storage volume to the at least one computing instance through a storage interface based on an established standard storage interface protocol. The control plane may obtain (access to) the plurality of block-level storage volumes and/or the at least one computing instance provisioned by the third party cloud computing environment as described above. The control plane of the generated virtual storage volume may be the logical layer which performs the steps of the method 100 as described herein (for example, the control plane may be executed by the apparatus 200, see below). For example, the control plane may perform the pooling of plurality of block-level storage volumes, the partitioning, the formatting, the erasure coding, the data read/write operations between the OS and the computing instance etc.

In some examples, the method 100 further comprises controlling, by the generated virtual storage volume, data read and/or write operations between the operating system of the at least one computing instance and the plurality of block-level storage volumes. For example, this control may be carried out by a control plane of the generated virtual storage volume. As described above, the generated virtual storage volume is presented to the operating system of the at least one computing instance as a singular block-level storage volume. The generated virtual storage volume may receive the I/O (Input/Output) requests from the operating system of the computing instance and may employ I/O scheduling and management algorithms to route a read/write request from the computing instance to multiple underlying block-level storage volumes of the plurality of block-level storage volumes residing on or connected to the computing instance or via a networked cluster. This may be done by slicing the data, applying data protection algorithms such as for example RDP (Row Double Parity) on the data and distributing the such processed data to the plurality of block-level storage volumes residing or connected to the computing instance or any storage node in the cluster using a statistical data placement algorithm. This may increase the total IOPS of the generated virtual storage volume (see also below). In some examples, controlling data read and/or write operations by the virtual storage volume comprises utilizing a performance optimization algorithm. For instance, the performance optimization algorithm may prioritize requests to a storage volume of the plurality of storage volumes based on a current workload and a specific storage performance metric of the storage volume. For example, based on a response time criteria, ensuring that read/write operations may be directed to less busy or lower-latency storage volume. In some examples, controlling data read and/or write operations by the virtual storage volume comprises mirroring data across multiple volumes for redundancy and quicker access (see below).

In some examples, the communication between the underlying plurality of block-level storage volumes and the generated virtual storage volume (that is the provided interface of the generated virtual storage volume) may be based on a virtual storage controller (for example part of the control plane). The virtual storage controller may receive the commands to read from or write to the generated virtual storage volume, translate them, and relay them to the underlying block-level storage volumes. That is, the virtual storage controller may simulate a physical storage interface, such that a standard interface protocol may be used for communication between virtual storage volume and the block-level storage volumes. For example, the virtual storage controller may be generated by the virtual storage volume itself. In some examples, if the computing instance is a VM, the virtual storage controller may be accessed by the hypervisor. For example, the hypervisor may connect to a Non-Volatile Memory Express (NVMe) interface to provide storage for the VM. For example, the virtual storage controller may receive an NVMe command from the hypervisor for the generated virtual storage volume, translate them, and relay them to the underlying block-level storage volumes (for instance NVMe storage volumes).

In another example, the block-level storage volumes may be accessed through a device pass-through by the generated virtual storage volume (for example the control plane). The device pass-through in virtualization may allow the generated virtual storage volume device to be directly controlled by the VM, bypassing the hypervisor. That is, the generated virtual storage volume (for example the control plane) may directly communicate with the underlying block-level storage volume (for example the storage node) via a standard storage interface protocol without mediation of the hypervisor. This may provide the VM with near-native access and performance by eliminating the overhead associated with hardware emulation and ensuring dedicated access to the hardware resources.

In some examples, the storage interface protocol may be Non-Volatile Memory Express (NVMe) or a Non-Volatile Memory Express over Fabrics (NVMe). The NVMe is an open interface specification designed to access non-volatile storage media (such as NAND flash memory or the like) through a PCI Express (PCIe) bus. NVMe may enhance performance by exploiting a solid-state storage's low latency and high internal parallelism. NVMe over Fabrics (NVMe-oF, also referred to Nvmf) may extend the NVMe protocol to network environments, enabling the connection of remote NVMe devices over different transport protocols (such as TCP/IP). In some examples, the storage interface protocol may be Linux Network Block Device (NBD). NBD enables a Linux-based system to use remote storage over a network as if it were a local block device. In some examples, the storage interface may be a Serial ATA (SATA), a Peripheral Component Interconnect Express (PCIe) and/or a Universal Serial Bus (USB). SATA may be a computer bus interface that connects a host bus adapter to mass storage devices (such as hard disk drives etc.) PCIe is a high-speed interface standard for connecting peripheral devices to the chipset of a main processor. USB is a bit-serial data transmission system for connecting a computer to external devices.

In some examples, the generated virtual storage volume has a number of IOPS based on numbers of IOPS of the plurality of block-level storage volumes. For example, the number of IOPS of the generated virtual storage volume may be a sum of the IOPS of all or of some of the plurality of block-level storage volumes (for example also comprising the one or more local storage device and/or the one or more networked storage volumes). The increased IOPS of the generated virtual storage volume may result from parallel processing capabilities of the pooled block-level storage volumes, enabling faster data access and improved performance.

In other words, the disclosed technique proposes to generate a virtual storage volume as described above instead of connecting the plurality block-level storage volumes to the computing instance directly via a virtual storage interface. The generated virtual storage volume is an additional virtualization layer, which may be implemented as a stack of virtual block-level storage volumes using a storage interface protocol. The generated virtual storage volume may (virtually) be located in between the block-level storage volumes and an operating system of the computing instance. Because the logical layers and/or physical entities on which the cloud computing environment is operated, and the block-level storage volumes are pooled are separated and completely distinct no changes to the existing infrastructure provisioned by the third-party cloud computing environment (such as the block-level storage volumes and/or the at least one computing instance) are required for the pooling. Therefore, the above described method may be operated as an out-of-the-box solution on a plurality of different third-party cloud computing environments (including hyperscalers) and without requiring any changes to the existing infrastructure or requiring any specific set-up of the provisioned infrastructure. Further, because a (standard) storage interface protocol is used to connect the generated virtual storage volume to the computing instance (such as NMVe protocol) no extra software needs to be installed on the computing devices hosting the computing instance and the above described method works "out-of-the-box" and may be partitioned and installed on any operating-system specific file system. The above described method aggregates the storage capacity and bandwidth of several block-level storage volumes and leverages the combined capabilities of multiple storage volumes, which may significantly increase the Input/Output Operations Per Second (IOPS). The IOPS may be a performance metric that quantifies how many read and write operations a storage system (such as physical hard drives, solid-state drives, virtual disks, and cloud storage volumes) can handle per second. In some examples, a cloud provider may provide a certain IOPS limit to the user or may charge high fees for higher IOPS. This IOPS limitations may be overcome by the above described method without paying further fees. Further, by providing access to the virtual storage volume through a standardized storage interface protocol, compatibility and integration with various computing instances are ensured, further streamlining the operational processes within the cloud environment. Still further, in some examples, a single virtual storage volume may be attached to a plurality of computing instances, enabling shared access and enhancing flexibility in data management. Altogether, by optimizing storage solutions the cost of capacity may be decreased and storage efficiency may be increased, making it both cost-effective and robust.

Compared to previous approaches such as a storage area network or the like, the herein described technique is independent from the (storage) hardware and the compute virtualization technology because of the logical and/or physical separation as described above. Further, the herein described technique may run in a TCP/IP network (such as NVMe-oF). Furthermore, the herein disclosed technique is independent from the type (physical, virtual) and distribution of the underlying storage volumes. Furthermore, the herein disclosed technique may be operated by a computing instance which is provisioned together with a storage volume and further may be highly scalable via distributed erasure coding and placement algorithms (see below).

In some examples, the plurality of block-level storage volumes comprises at least one local block-level storage device. The generated virtual storage volume is generated further based on at least one local block-level storage device. The at least one local block-level storage device is local to the at least one computing instance. For example, the local block-level storage device may be a physical storage device, or a part of a physical storage device. In other words, the local storage device, may be directly connected to or situated within computing instance (or the device running the computing instance). That means, the local storage device may not be a remote or network-attached storage device but located in physically proximate computing instance (or the device running the computing instance). In some examples, the computing instance may be running on a computing device (for example the apparatus 200, see Fig. 2 below). In this case the local storage device, may be directly connected to or situated within the computing device running the computing instance. For example, the computing device May be a PC, or a physical server or an infrastructure or the like. In some examples, the at least one computing instance is a virtual compute instance. The at least one local block-level storage device is local to the at least one computing device running the virtual compute instance.

In some examples, a plurality of computing instances may be running on the same computing device which is comprising a local block-level storage device. This local block-level storage device of the computing device is then local to all of the plurality of computing instances. In some examples, the computing device may comprise a plurality of local block-level storage devices. Each of the plurality of local block-level storage devices may then be local each computing instance that is running on the computing device.

In some examples, the local storage may be connected to the generated virtual storage volume via a storage interface protocol. The storage interface protocol may be a NVMe interface, a NVMe-oF interface, an NBD interface, a SATA interface, PCIe interface or the like. The local storage device may be accessed by the generated virtual storage volume by the storage interface protocol as described above via device pass-through or via virtual storage controller as described above.

In some examples, the generated virtual storage volume may have a read latency of less than 50 microseconds higher than a read latency of the plurality of block-storage devices. The read latency may refer to the time delay between the initiation of a read request for data from a storage volume and the receipt of the corresponding response within, for instance encompassing factors such as processing time, network transmission time, and data access time, crucially impacting the efficiency and speed of data retrieval operations. In some examples, the read latency of the one or more local block-storage devices may refer to the lowest read latency among all of the one or more local block-storage devices or it may refer to the highest read latency among all of the one or more local block-storage devices. In some examples, the read latency of the one or more block-storage devices may refer to a measure of central tendency (such as mean, or median) of all of the one or more local block-storage devices. In other words, the read latency of the generated virtual storage volume may be maximally 50 microseconds higher (for example, 10ms or 20ms or 30ms or 40ms) than the read latency of the one or more block-storage devices. In some examples, the read latency may be lower than 100 microseconds.

For example, one or more local storage devices have lowest read latency among all of the one or more local block-storage devices. For example, the read latency of the generated virtual storage volume may be low because of the low read latency of the at least one local storage device. For example, the read latency of the local storage device may be low because it may involve accessing data directly from a physical storage medium located near the computing device, minimizing the time required for data retrieval. For example, the generated virtual storage volume may have a read latency of less than 50 microseconds higher than a read latency of the at least one local block-storage device.

In some examples, the plurality of block-level storage volumes comprises at least one networked block-level storage volume. The virtual storage volume is generated further based on the at least one networked block-level storage volume. A networked storage volume may be a storage volume that is connected to the computing device which is running the computing instance via a network connection.

In some examples, the method 100 further comprises formatting the generated virtual storage volume with a file system. Formatting the generated virtual storage volume with a file system may involve initializing the storage space and organizing it according to a specific file system structure. A file system may be a structure used by the operating systems of the computing device to organize and store data on virtual storage volume. It manages how data is stored, retrieved, and organized into files and directories. For example, the file system may run on top of the block-level structure of the generated virtual storage volume. For example, the file may be New Technology File System (NTFS), ext4, Apple File System (APFS) or the like.

In some examples, the method 100 comprises partitioning the generated virtual storage volume into a plurality of virtual storage volumes. For example, partitioning the generated virtual storage volume into a plurality of virtual storage volumes may comprise dividing the storage space into distinct sections or partitions, each functioning as an independent storage entity. This may allow for better organization and management of data by separating different types of content or allocating specific storage resources to different purposes. Each partition may operate as its own logical virtual storage volume and may be formatted with its own file system. This may enable separate data storage and access controls within the overall storage environment. In some examples, the generated partitioning may comprise predetermined storage performance metrics. For instance, a partitioning may be generated such that it comprises a predetermined size, a predetermined number of IOPS, and/or a predetermined read latency. In some examples, the storage performance metrics of the partitioning may be adapted dynamically. For example, the size of the partitioning may be thinly provisioned which means that the size of the partitioning may be increased as data is actually written to the partitioning. In some examples, each of the plurality of partitioned virtual storage volumes may comprise a predetermined size, a predetermined number of IOPS, and/or a predetermined read latency.

In some examples, the method 100 may further comprise storing a data file in the generated virtual storage volume using erasure coding. Erasure coding may be based on redundancy data which may be based on the stored data. For example, the erasure coding may generate redundancy information based on the stored data file. For example, if parts of the data file get lost, the data file may be restored by using the non-lost parts of the data file and the redundancy data. For example, the data file may be stored in the generated virtual storage volume by dividing the data file into a plurality of data chunks which may be stored in the underlying plurality of block-level storage volumes. For example, the data file may be divided into n data chunks, where *N* is a natural number. The *N* data chunks, may be distributed among the plurality of block-level storage volumes. For example, the *N* data chunks, may be distributed among the plurality of block-level storage volumes in a specific pattern, referred to as data stripe pattern. For example, the stripe pattern may define that one data chunk is distributed to each of *n* (*n* is a natural number) plurality of storage volumes in succession, and after each of the plurality of storage volumes has received one data chunk, the process starts again from the beginning and a data chunk is distributed to each of the plurality of storage volumes. One such cycle may be referred to as a data stripe comprising *n* data chunks. For example, a certain amount of redundancy data is generated for each data stripe. If one redundancy data is generated for each data stripe of *n* data chucks, this is referred to as *n* + 1 erasure coding, if two redundancy data is generated for each data stripe, this is referred to as n + 2 erasure coding, etc.

The data stripe pattern may be defined by the generated virtual storage volume (for example the control plane) and the data chunk distribution may be controlled by the generated virtual storage volume.

For example, a Row-Diagonal Parity (RDP) algorithm may be used for erasure coding. For example, the data distribution of the data chunks according to the data stripe pattern may yield a matrix structure. That is each row in the matrix may represent a stripe of data chunks that spans all storage volume. The columns may represent the number of storage volumes. The RDP algorithm may be generating a row and a diagonal parity data (or redundancy data) and enhance data integrity through these two complementary types of parity calculations. The row parity data may be generated by computing the exclusive OR (XOR) of data blocks along each horizontal row of the above described matrix, providing a single parity value that can detect and correct errors within that row. The diagonal parity may be calculated by performing XOR operations across staggered diagonals that span multiple rows, shifting with each new row to ensure a different grouping of data blocks. For example, may be a n + 2 erasure coding, wherein for each data stripe one row and one corresponding diagonal redundancy data is determined.

Replicating a volume across availability zones, either through synchronous or asynchronous methods, ensures data durability and high availability by keeping copies in separate physical locations.

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 7).

**Fig. 2** illustrates a block diagram of an example of an apparatus 200 for pooling block-level storage volumes in a third-party cloud computing environment. The apparatus 200 comprises circuitry that is configured to provide the functionality of the apparatus 200. For example, the apparatus 200 of Fig. 2 comprises interface circuitry 220, processing circuitry 230 and (optional) storage circuitry 240. For example, the processing circuitry 230 may be coupled with the interface circuitry '220 and optionally with the storage circuitry 240. For example, the processing circuitry 230 may be configured to provide the functionality of the apparatus 200, in conjunction with the interface circuitry 220. For example, the interface circuitry 220 is configured to exchange information, e.g., with other components inside or outside the apparatus 200 and the storage circuitry 240.

In general, the functionality of the processing circuitry 230 may be implemented by the processing circuitry 230 executing machine-readable instructions. Accordingly, any feature ascribed to the processing circuitry 230 may be defined by one or more instructions of a plurality of machine-readable instructions. The apparatus 200 may comprise the machine-readable instructions, e.g., within the storage circuitry 240.

The interface circuitry 220 may correspond to one or more inputs and/or outputs for receiving and/or transmitting information, which may be in digital (bit) values according to a specified code, within a module, between modules or between modules of different entities. For example, the interface circuitry 220 may comprise circuitry configured to receive and/or transmit information.

For example, the processing circuitry 230 may be implemented using one or more processing units, one or more processing devices, any means for processing, such as a processor, a computer or a programmable hardware component being operable with accordingly adapted software. In other words, the described function of the processing circuitry 230 or means for processing 230 may as well be implemented in software, which is then executed on one or more programmable hardware components. Such hardware components may comprise a general-purpose processor, a Digital Signal Processor (DSP), a micro-controller, etc.

For example, the storage circuitry 240 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage. For example, the storage circuitry 140 may store a (UEFI) BIOS.

The processing circuitry 230 is configured generate a virtual storage volume based on a plurality of block-level storage volumes by representing the generated virtual storage volume as a singular block-level storage volume to an operating system of at least one computing instance in the cloud computing environment. The processing circuitry 230 is further configured to provide the at least one computing instance access to the generated virtual storage volume via a storage interface protocol. For example, the apparatus 200 may be a computing device running the at least one computing instance. The apparatus 200 may be physically different from the apparatus which operates the third-party cloud computing environment. In some examples, the apparatus may perform the pooling as described herein logically separated from operating the cloud computing environment, where no access from one logical layer to other is possible.

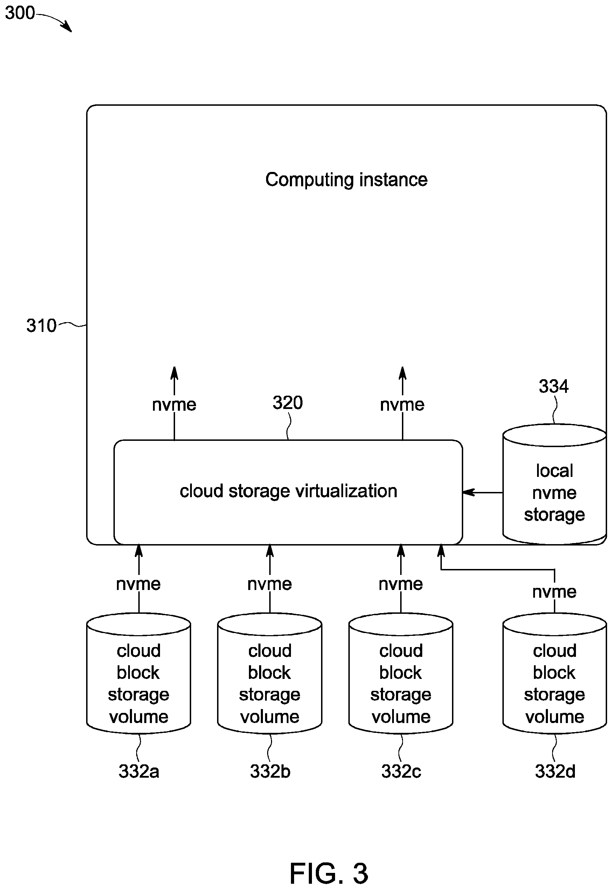

Further details and aspects are mentioned in connection with the examples described above or below. The example shown in Fig. 2 may include one or more optional additional features corresponding to one or more aspects mentioned in connection with the proposed concept or one or more examples described above (e.g., Fig. 1) or below (e.g., Figs. 3 - 5).

**Fig. 3** illustrates an example of a block diagram 300 of a virtual storage volume pooling block-level storage volumes in a cloud computing environment. A computing instance (for example a virtual server or a virtual machine) 310 has access to a generated virtual storage volume 320 (also referred to as cloud storage virtualization). The generated virtual storage volume 320 is connected to the computing instance via a NVMe interface. The virtual storage volume 320 is generated based on cloud storage volumes 332a - 332 and on a local storage volume 334. The cloud storage volumes 332a - 332 and the local storage volume 334 are accessed by the generated virtual storage volume 320 via a NVMe interface.

In other words, instead of connecting the cloud block storage volumes 332a - 332d to the computing instance 310 (for instance the virtual server) directly via the NVMe protocol - where they would show up as NVMe storage volumes and may be used like a physical storage volume, for instance by formatting them with a file system - the virtual storage volume 310 is generated as described above. The generated virtual storage volume 310 is an additional virtualization layer, which may be implemented as a stack of virtual block-level storage volumes using the NVMe protocol. The generated virtual storage volume may (virtually) be located in between the block-level storage volumes 332a - 332d and an operating system of the computing instance 330. In some examples, the generated virtual storage volume may run as a user-space process in a container on top of the operating system, wherein the generated virtual storage volume directly attaches the NVMe "hardware" volumes.

Further, the virtual storage volume 310 may connect the cloud block-level storage volumes 332a - 332d and (optionally) the fast local storage device 334 and generate a virtual pool of storage volumes out of them. The generated virtual storage volume 310 is exposed to the computing instance 310 (or the operating system of the computing instance 310). In some examples, the generated virtual storage volume 310 may be partitioned into a plurality of virtual storage volumes. In some examples, each of the plurality of partitioned virtual storage volumes may comprise different performance profiles and/or a thinly provisioned capacity.

The generated virtual storage volumes may show up as an NMVe device on the operating system (such as Linux or Windows^{®}) of the computing instance 310. Because NVMEe may be considered as an industry standard for fast solid-state drive (SSD) storage devices no extra software needs to be installed on those computing devices hosting the computing instance 10 (also referred to as host) as the NVMe initiator protocol for TCP/IP may already be part of the operating system kernels (such as Linux). Therefore, generated virtual storage volumes work "out-of-the-box" and may be partitioned and installed on any operating-system specific file system.

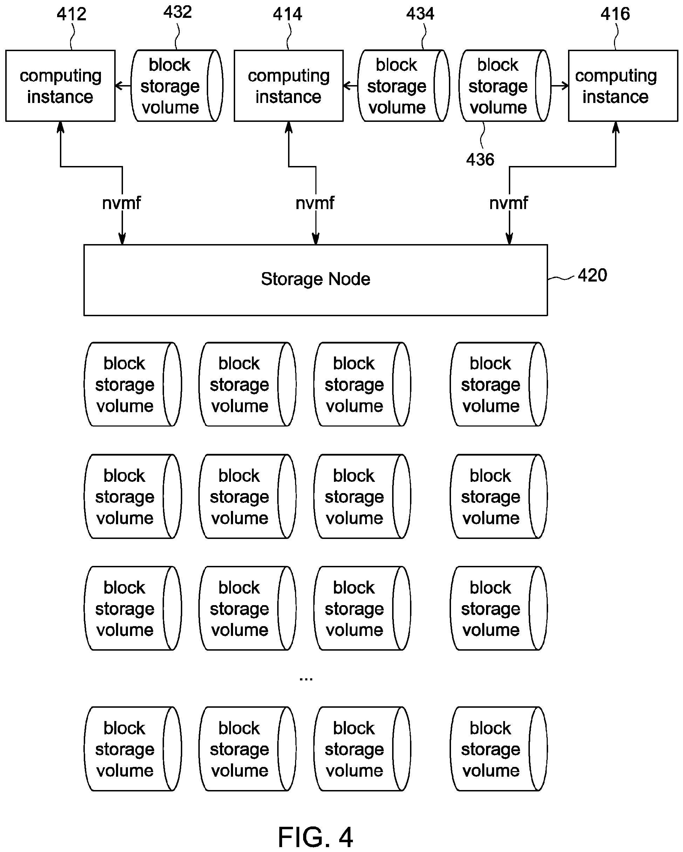

Further details and aspects are mentioned in connection with the examples described above or below. The example shown in Fig. 3 may include one or more optional additional features corresponding to one or more aspects mentioned in connection with the proposed concept or one or more examples described above (e.g., Figs. 1 - 2) or below (e.g., Figs. 4 - 7).

### Implementation examples of the proposed technique

**Fig. 4** illustrates a first example of a virtual storage volume pooling block-level storage volumes in a third-party cloud computing environment. The storage node 420 comprises a plurality of block-level storage volumes. For example, the storage node 420 may be a data plane of a generated virtual storage volume 430. The storage node 420 may be implemented as a cloud virtual server. The generated virtual storage volume may further comprise a control plane (not shown in the Fig. 4) to which the storage node 420 is connected. The control plane provides each of the computing instances 412, 414, 416 access to generated virtual storage volume 430 via NMVe or NVMf (NVM Express over Fabrics). The control plane may be highly scalable and may serve thousands of storage clusters. For instance, the computing instances 412, 414, 416 may be amazon Elastic Kubernetes Service (EKS) worker nodes which execute the application containers within an EKS-managed Kubernetes cluster. These nodes may be amazon web service (AWS) Elastic Compute Cloud (EC2) instances or managed node groups that the Kubernetes control plane orchestrates to run, schedule, and manage containers based on user-defined specifications. EC2 is a service from AWS that provides resizable compute capacity in the cloud, allowing users to run virtual servers. The generated virtual storage volume may be partitioned into three virtual storage volumes 432, 434, 436. Each of the three computing instances 412, 414, 416 has respective access to one of the three virtual storage volumes 432, 434, 436. Each of the three virtual storage volumes 432, 434, 436 has a predetermined size, a predetermined number of IOPS, and a predetermined read latency. In another example, the generated virtual storage is not partitioned and each of the three virtual storage volumes 432, 434, 436 are identical to the generated virtual storage volume and each of the computing instances 412, 414, 416 have access the same virtual storage volume.

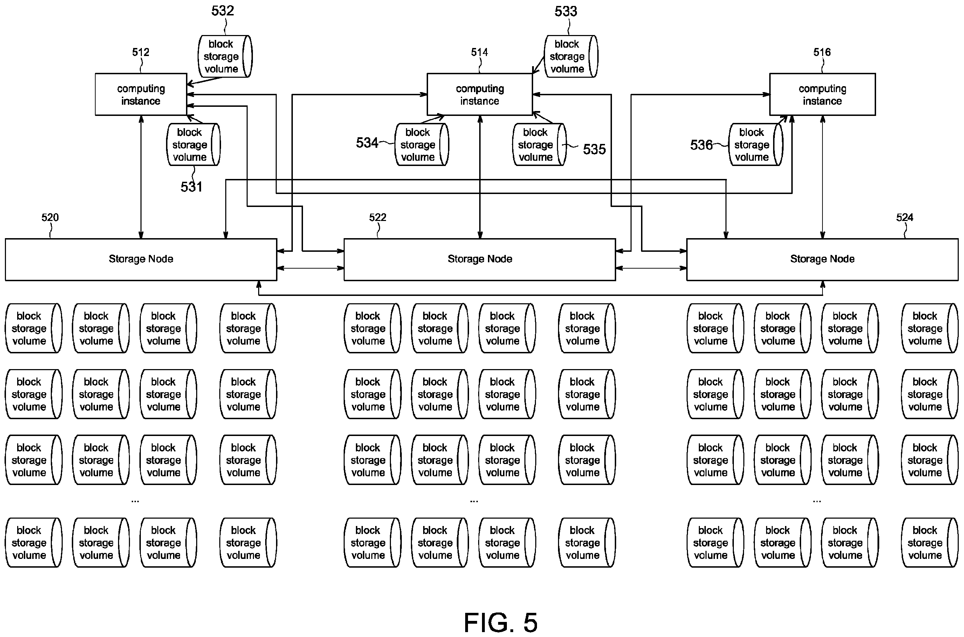

For example, one or more storage nodes may be added to the data plane of the generated virtual storage volume if processing power of a single storage node is not sufficient or high-availability is required (this may be referred to as linear scale-out option). In this case, multiple storage nodes are added to a cluster and compute instances are connected to all of them as described with regards to Fig. 5.

Further details and aspects are mentioned in connection with the examples described above or below. The example shown in Fig. 4 may include one or more optional additional features corresponding to one or more aspects mentioned in connection with the proposed concept or one or more examples described above (e.g., Figs. 1 - 3) or below (e.g., Figs. 5 - 7).

**Fig. 5** illustrates a second example of a virtual storage volume pooling block-level storage volumes in a cloud computing environment. Each of the storage nodes 520, 522, 524 comprises a plurality of block-level storage volumes. Each of the storage nodes 520, 522, 524 may be connected to each other, for example via NMVf. For example, one or all of the storage nodes 520, 522, 524 may be considered the data plane of a generated virtual storage volume. The storage nodes 520, 522, 524 may be implemented as cloud virtual servers. The generated virtual storage volume may further comprise a control plane (not shown in the Fig. 5). The control plane of the generated virtual storage volume may organize the storage nodes 520, 522, 524 and may partition the generated virtual storage volume into the virtual storage volumes 531, 532, 533, 534, 535, 536. In another example, the generated virtual storage is not partitioned and each of the virtual storage volumes 531, 532, 533, 534, 535, 536 are identical to the generated virtual storage volume and each of the computing instances 512, 514, 516 have access the same virtual storage volume. Each of the virtual storage volumes 531, 532, 533, 534, 535, 536 has a predetermined size, a predetermined number of IOPS, and a predetermined read latency. The control plane of the generated virtual storage volume provides the computing instance 512 access to the virtual storage volumes 531, 532, provides the computing instance 514 access to the virtual storage volumes 533, 534, 535 and provides the computing instance 516 access to the virtual storage volume 536. Each of the computing instances 512, 514, 516 is connected to each of the storage nodes 520, 522, 524 for example via NVMf. In another example, the computing instances 512, 514, 516 may only connected to some of the storage nodes 520, 522, 524. As described with regards to Fig. 4 the computing instances 512, 514, 516 may be amazon EKS worker nodes.

The storage nodes are part of the generated virtual storage volume and may provide both the storage capacity and the compute capacity and network required for the storage data services (i.e. the provision of the virtual storage volume, the partitioning of smaller volumes, erasure coding, etc.).

For example, if one or more of the storage nodes 520, 522, 524 fail, a transparent (online) fail-over may take care of the switching the connection of the storage node connected to the virtual storage volume. The computing nodes 512, 514, 516 may already have this switching-mechanism built into the operating system kernels (Linux and Windows Server), so that no extra software is required. For example, NVMe multipathing Asymmetric Namespace Access (ANA) feature may be used.

That is, storage capacity may be expanded through adding additional storage nodes to the virtual storage volume data plane as described with regards to Fig. 5. In another example, the storage capacity may be expanded by expanding the block-level storage volumes of a storage node. In any case, the expansion may be performed in online and as a background operation and will result into an automatically re-balanced storage cluster after a while (background operation).

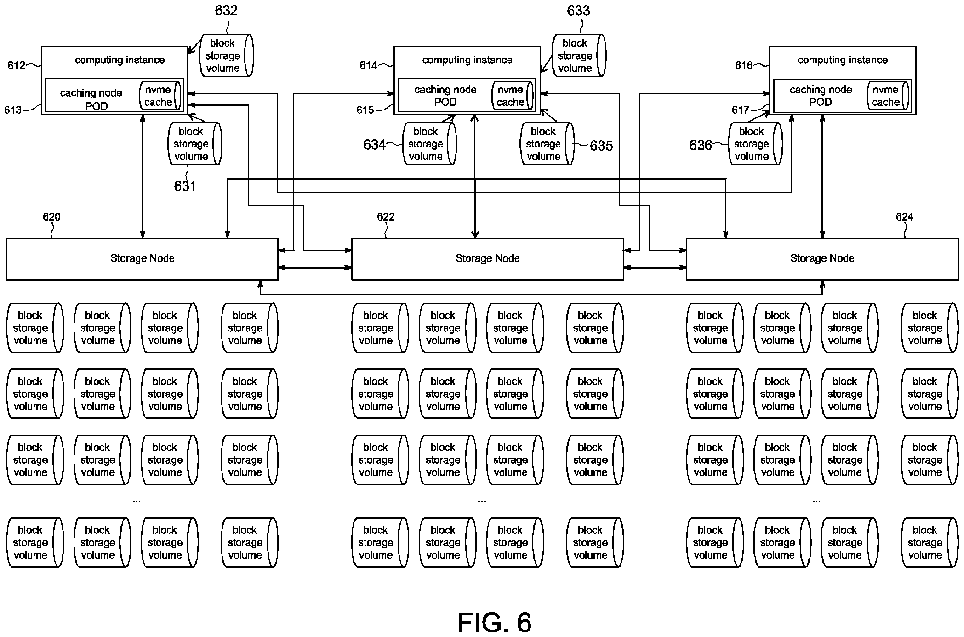

Further details and aspects are mentioned in connection with the examples described above or below. The example shown in Fig. 5 may include one or more optional additional features corresponding to one or more aspects mentioned in connection with the proposed concept or one or more examples described above (e.g., Figs. 1 - 4) or below (e.g., Figs. 6 - 7).

**Fig. 6** illustrates a third example of a virtual storage volume pooling block-level storage volumes in a cloud computing environment. Fig. 6 illustrates similar to Fig. 5 three storage nodes 620, 622, 624 each comprising a plurality of block-level storage volumes. Each of the storage nodes 620, 622, 624 may be connected to each other, for example via NMVf. The storage nodes 620, 622, 624 may be implemented as cloud virtual servers. The computing instances 612, 614, 616 may be amazon EKS worker nodes. Further, the computing instance instances 612, 614, 616 each comprise a respective local storage device 613, 615, 617 which may be connected to the respective computing instance via NVMe protocol. For example, the generated virtual storage volume may comprise a data plane which comprise one or more of the storage nodes 620, 622, 624 and one or more of the local storage devices 613, 615, 617. The control plane of the generated virtual storage volume may organize the storage nodes 620, 622, 624 and may partition the generated virtual storage volume into the virtual storage volumes 631, 632, 633, 634, 635, 636. For instance, the partitioned virtual storage volumes 631, 632 are based on some or all of the storage nodes 620, 622, 624 and the local storage device 613. For instance, the partitioned virtual storage volumes 633, 634, 635 are based on some or all of the storage nodes 620, 622, 624 and the local storage device 615. For instance, the partitioned virtual storage volume 636 are based on some or all of the storage nodes 620, 622, 624 and the local storage device 617. In another example, the generated virtual storage is not partitioned and each of the virtual storage volumes 631, 632, 633, 634, 635, 636 are identical to the generated virtual storage volume and each of the computing instances 612, 614, 616 have access the same virtual storage volume. Each of the virtual storage volumes 631, 632, 633, 634, 635, 636 has a predetermined size, a predetermined number of IOPS, and a predetermined read latency. The control plane of the generated virtual storage volume provides the computing instance 612 access to the virtual storage volumes 631, 632, provides the computing instance 614 access to the virtual storage volumes 633, 634, 635 and provides the computing instance 616 access to the virtual storage volume 636. Each of the computing instances 612, 614, 616 is connected to each of the storage nodes 620, 622, 624 for example via NVMf. In another example, the computing instances 562, 614, 616 may only connected to some of the storage nodes 620, 622, 624. The storage nodes are part of the generated virtual storage volume and may provide both the storage capacity and the compute capacity and network required for the storage data services (i.e. the provision of the virtual storage volume, the partitioning of smaller volumes, erasure coding, etc.).

Therefore, the read-IOPS can be boosted, and the read access latency may be decreased below 100 microseconds by adding the local storage devices. For example, the local storage devices may be NVMe write-through (read) caches. These caches may be deployed as containers on the computing instances, accessing local instance NVMe storage, but at the same time are managed as part of the control plane cluster. For example, in the Kubernetes environments, this may be done as part of container storage interface driver deployment via helm chart.

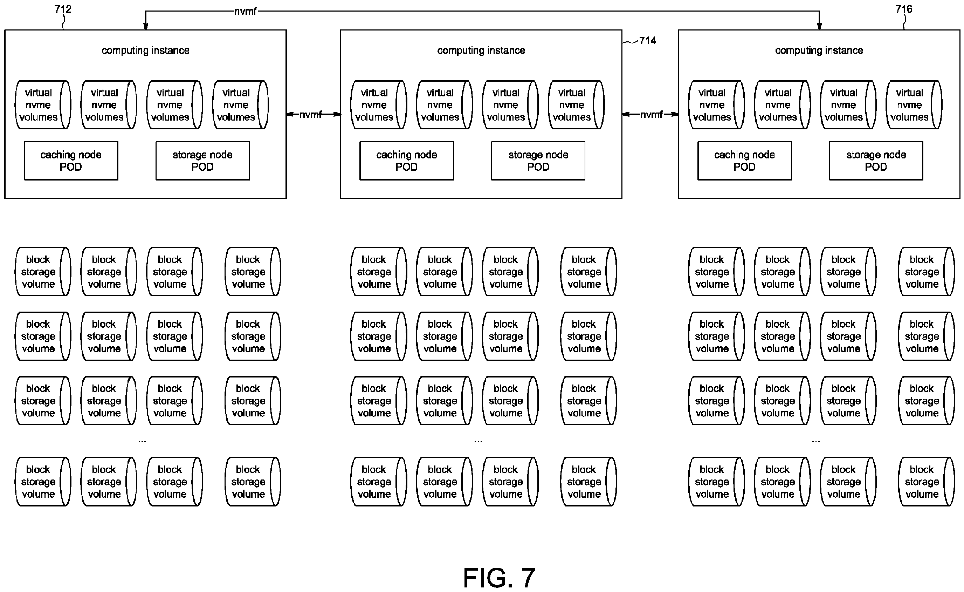

Further details and aspects are mentioned in connection with the examples described above or below. The example shown in Fig. 6 may include one or more optional additional features corresponding to one or more aspects mentioned in connection with the proposed concept or one or more examples described above (e.g., Figs. 1 - 5) or below (e.g., Fig. 7).

**Fig. 7** illustrates a fourth example of a virtual storage volume pooling block-level storage volumes in a cloud computing environment. Each of the three computing instances 712, 714, 716 comprises a local storage, that is a caching node POD and a storage node POD (in some examples both is local storage, in some examples only one of the caching node POD and a storage node POD is local storage). Each of the computing instances 712, 714, 716 may be connected to each other, for example via NMVf. To each of the computing instances 712, 714, 716 a respective plurality of block-level storage volumes is connected, for example via NVMf. In this case there is no storage nodes which organize the plurality of block-level storage volumes. The generated virtual storage volume comprises a data plane and a control plane (now shown in Fig. 7). The data plane may pool the plurality of block-level storage volumes of each of the computing instances 712, 714, 716 directly because there are no storage nodes in this example. The data plane further pools the local storage (e.g., the caching node POD and the storage node POD) into the generated virtual storage volume. The control plane of the generated virtual storage volume may organize all the plurality of block-level storage volumes and the local storage and may partition the generated virtual storage. The control plane may provide each of the computing instances 712, 714, 716 access to four partitions of the generated virtual storage volume. For example, the four partitions of the generated virtual storage volume provided to the computing instance 712 may be based on the plurality of block-level storage volumes of each of the computing instances 712, 714, 716 and on the local storage of the computing instance 712. The same may be done respectively for the computing instance 714 and 716. Each of the virtual storage volumes provided to each of the computing instances 712, 714, 716 has a predetermined size, a predetermined number of IOPS, and a predetermined read latency. This approach may require sufficient spare capacity (for example processing power and RAM) for the computing instance instances. No additional separate storage nodes and virtual servers are required in this approach and therefore this approach may be more cost-efficient.

Further details and aspects are mentioned in connection with the examples described above. The example shown in Fig. 7 may include one or more optional additional features corresponding to one or more aspects mentioned in connection with the proposed concept or one or more examples described above (e.g., Figs. 1 - 6).

In the following, some examples of the proposed concept are presented:
An example (e.g., example 1) relates to a method (100) for pooling block-level storage volumes (332a, 332b, 332c, 332d) in a cloud computing environment comprising generating (110) a virtual storage volume (320) based on a plurality of block-level storage volumes (332a, 332b, 332c, 332d) by representing the generated virtual storage volume (320) as a singular block-level storage volume to an operating system of at least one computing instance (310) in the cloud computing environment, providing (120) the at least one computing instance (310) access to the generated virtual storage volume (320) via a storage interface protocol.

Another example (e.g., example 2) relates to a previous example (e.g., example 1) or to any other example, further comprising controlling, by the generated virtual storage volume (320), data read and/or write operations between the operation system of the at least one computing instance (310) and the plurality of block-level storage volumes (332a, 332b, 332c, 332d).

Another example (e.g., example 3) relates to a previous example (e.g., one of the examples 1 to 2) or to any other example, further comprising that the plurality of block-level storage volumes (332a, 332b, 332c, 332d) comprises at least one local block-level storage (334) device and the generated virtual storage volume (320) is generated further based on the least one local block-level storage device (334), the at least one local block-storage device (334) being local to the at least one computing instance (310).

Another example (e.g., example 4) relates to a previous example (e.g., example 3) or to any other example, further comprising that the at least one computing instance (310) is a virtual compute instance (310), and the at least one local block-level storage device (334) is local to the at least one computing device running the virtual compute instance (310).

Another example (e.g., example 5) relates to a previous example (e.g., one of the examples 3 or 4) or to any other example, further comprising that the at least one local block-level storage device (334) is connected to the generated virtual storage volume (320) via a storage interface protocol.

Another example (e.g., example 6) relates to a previous example (e.g., one of the examples 3 to 5) or to any other example, further comprising that the plurality of block-level storage volumes (332a, 332b, 332c, 332d) comprises at least one networked block-level storage volume and the generated virtual storage volume (320) is generated further based on at least one networked block-level storage volume.

Another example (e.g., example 7) relates to a previous example (e.g., one of the examples 1 to 6) or to any other example, further comprising that the generated virtual storage volume (320) has a read latency of less than 50 microseconds higher than a read latency of the plurality of block-level storage volumes (332a, 332b, 332c, 332d).

Another example (e.g., example 8) relates to a previous example (e.g., one of the examples 1 to 7) or to any other example, further comprising that the generated virtual storage volume (320) has a number of IOPS based on numbers of IOPS of the plurality of block-level storage volumes (332a, 332b, 332c, 332d).

Another example (e.g., example 9) relates to a previous example (e.g., one of the examples 1 to 8) or to any other example, further comprising that the at least one computing instance (310) is a virtual machine.

Another example (e.g., example 10) relates to a previous example (e.g., one of the examples 1 to 9) or to any other example, further comprising that the at least one computing instance (310) is a container.

Another example (e.g., example 11) relates to a previous example (e.g., one of the examples 1 to 10) or to any other example, further comprising that the generated virtual storage volume (320) is composed within a user-space process and running within a container.

Another example (e.g., example 12) relates to a previous example (e.g., one of the examples 1 to 11) or to any other example, further comprising formatting the generated virtual storage volume (320) with a file system.

Another example (e.g., example 13) relates to a previous example (e.g., one of the examples 1 to 12) or to any other example, further comprising storing a data file in the generated virtual storage volume (320) using erasure coding, the erasure coding being based on redundancy data based on the stored data file.

Another example (e.g., example 14) relates to a previous example (e.g., one of the examples 1 to 13) or to any other example, further comprising partitioning the generated virtual storage volume (320) into a plurality of virtual storage volumes (320).

Another example (e.g., example 15) relates to a previous example (e.g., example 14) or to any other example, further comprising that each of the plurality of partitioned virtual storage volumes (320) comprises a predetermined size, a predetermined number of input/output operations per second, IOPS, and/or a predetermined read latency.

Another example (e.g., example 16) relates to a previous example (e.g., one of the examples 1 to 15) or to any other example, further comprising that the storage interface protocol is at least one of Non-Volatile Memory Express, Non-Volatile Memory Express over Fabrics, Linux Network Block Device, Serial ATA, Peripheral Component Interconnect Express, Universal Serial Bus.

Another example (e.g., example 17) relates to a previous example (e.g., one of the examples 1 to 16) or to any other example, further comprising that the plurality of block-level storage volumes (332a, 332b, 332c, 332d) are virtual storage volumes.

An example (e.g., example 18) relates to an apparatus (200) for pooling block-level storage volumes (332a, 332b, 332c, 332d) in a cloud computing environment comprising processor circuitry (230) configured to generate a virtual storage volume (320) based on a plurality of block-level storage volumes (332a, 332b, 332c, 332d) by representing the generated virtual storage volume (320) as a singular block-level storage volume to an operating system of at least one computing instance (310) in the cloud computing environment, provide the at least one computing instance (310) access to the generated virtual storage volume (320) via a storage interface protocol.

Another example (e.g., example 19) relates to a non-transitory machine-readable storage medium including program code, when executed, to cause a machine to perform the method (100) of any one of examples 1 to 17.

Another example (e.g., example 20) relates to a machine-readable storage including machine readable instructions, when executed, to implement a method (100) or realize an apparatus as claimed in any pending claim.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for pooling block-level storage volumes (332a; 332b; 332c; 332d) in a third-party cloud computing environment comprising:
generating (110) a virtual storage volume (320) based on a plurality of block-level storage volumes (332a; 332b; 332c; 332d) by representing the generated virtual storage volume (320) as a singular block-level storage volume to an operating system of at least one computing instance (310) in the cloud computing environment;
providing (120) the at least one computing instance (310) access to the generated virtual storage volume (320) via a storage interface protocol.

2. The method (100) according to claim 1, further comprising obtaining the plurality of block-level storage volumes (332a; 332b; 332c; 332d) and/or the at least one computing instance (310) provisioned by the third party cloud computing environment.

3. The method (100) according to any one of claims 1 or 2, further comprising controlling, by the generated virtual storage volume (320), data read and/or write operations between the operating system of the at least one computing instance (310) and the plurality of block-level storage volumes (332a; 332b; 332c; 332d).

4. The method (100) according to any one of claims 1 to 3, wherein the plurality of block-level storage volumes (332a; 332b; 332c; 332d) comprises at least one local block-level storage (334) device and the generated virtual storage volume (320) is generated further based on the least one local block-level storage device (334), the at least one local block-storage device (334) being local to the at least one computing instance (310).

5. The method according to claim 4, wherein the at least one computing instance (310) is a virtual compute instance (310), and the at least one local block-level storage device (334) is local to the at least one computing device running the virtual compute instance (310).

6. The method (100) according to claims 4 or 5, wherein the at least one local block-level storage device (334) is connected to the generated virtual storage volume (320) via a storage interface protocol.

7. The method (100) according to any one of claims 4 to 6, wherein the plurality of block-level storage volumes (332a; 332b; 332c; 332d) comprises at least one networked block-level storage volume and the generated virtual storage volume (320) is generated further based on at least one networked block-level storage volume.

8. The method (100) according to any of claims 1 to 7, wherein the generated virtual storage volume (320) has a read latency of less than 50 microseconds higher than a read latency of the plurality of block-level storage volumes (332a; 332b; 332c; 332d).

9. The method (100) according to any one of claims 1 to 8, wherein the generated virtual storage volume (320) has a number of IOPS based on numbers of IOPS of the plurality of block-level storage volumes (332a; 332b; 332c; 332d).

10. The method (100) according to any one of claims 1 to 9, wherein the at least one computing instance (310) is a virtual machine and/or wherein the at least one computing instance (310) is a container.

11. The method (100) according to any one of claims 1 to 10, wherein the generated virtual storage volume (320) is composed within a user-space process and running within a container.

12. The method (100) according to any one of claims 1 to 11, further comprising storing a data file in the generated virtual storage volume (320) using erasure coding, the erasure coding being based on redundancy data based on the stored data file.

13. The method (100) according to any one of claims 1 to 12, further comprising partitioning the generated virtual storage volume (320) into a plurality of virtual storage volumes (320).

14. The method (100) according to claim 13, wherein each of the plurality of partitioned virtual storage volumes (320) comprises a predetermined size, a predetermined number of input/output operations per second, IOPS, and/or a predetermined read latency.

15. An apparatus (200) for pooling block-level storage volumes (332a; 332b; 332c; 332d) in a third-party cloud computing environment comprising processor circuitry (230) configured to:
generate a virtual storage volume (320) based on a plurality of block-level storage volumes (332a; 332b; 332c; 332d) by representing the generated virtual storage volume (320) as a singular block-level storage volume to an operating system of at least one computing instance (310) in the cloud computing environment;
provide the at least one computing instance (310) access to the generated virtual storage volume (320) via a storage interface protocol.

## Amended claims

### Amended claims in accordance with Rule 137(2) EPC.

1. A method (100) for pooling block-level storage volumes (332a; 332b; 332c; 332d) in a third-party cloud computing environment comprising:
obtaining a plurality of block-level storage volumes (332a; 332b; 332c; 332d) and at least one computing instance (310) provisioned by the third party cloud computing environment;
generating (110) a virtual storage volume (320) based on the plurality of block-level storage volumes (332a; 332b; 332c; 332d) by representing the generated virtual storage volume (320) as a singular block-level storage volume to an operating system of the at least one computing instance (310) in the cloud computing environment;
providing (120) the at least one computing instance (310) access to the generated virtual storage volume (320) via a storage interface protocol.

2. The method (100) according to claim 1, further comprising controlling, by the generated virtual storage volume (320), data read and/or write operations between the operating system of the at least one computing instance (310) and the plurality of block-level storage volumes (332a; 332b; 332c; 332d).

3. The method (100) according to any one of claims 1 to 2, wherein the plurality of block-level storage volumes (332a; 332b; 332c; 332d) comprises at least one local block-level storage (334) device and the generated virtual storage volume (320) is generated further based on the least one local block-level storage device (334), the at least one local block-storage device (334) being local to the at least one computing instance (310).

4. The method according to claim 3, wherein the at least one computing instance (310) is a virtual compute instance (310), and the at least one local block-level storage device (334) is local to the at least one computing device running the virtual compute instance (310).

5. The method (100) according to claims 3 or 4, wherein the at least one local block-level storage device (334) is connected to the generated virtual storage volume (320) via a storage interface protocol.

6. The method (100) according to any one of claims 3 to 5, wherein the plurality of block-level storage volumes (332a; 332b; 332c; 332d) comprises at least one networked block-level storage volume and the generated virtual storage volume (320) is generated further based on at least one networked block-level storage volume.

7. The method (100) according to any of claims 1 to 6, wherein the generated virtual storage volume (320) has a read latency of less than 50 microseconds higher than a read latency of the plurality of block-level storage volumes (332a; 332b; 332c; 332d).

8. The method (100) according to any one of claims 1 to 7, wherein the generated virtual storage volume (320) has a number of IOPS based on numbers of IOPS of the plurality of block-level storage volumes (332a; 332b; 332c; 332d).

9. The method (100) according to any one of claims 1 to 8, wherein the at least one computing instance (310) is a virtual machine and/or wherein the at least one computing instance (310) is a container.

10. The method (100) according to any one of claims 1 to 9, wherein the generated virtual storage volume (320) is composed within a user-space process and running within a container.

11. The method (100) according to any one of claims 1 to 10, further comprising storing a data file in the generated virtual storage volume (320) using erasure coding, the erasure coding being based on redundancy data based on the stored data file.

12. The method (100) according to any one of claims 1 to 11, further comprising partitioning the generated virtual storage volume (320) into a plurality of virtual storage volumes (320).

13. The method (100) according to claim 12, wherein each of the plurality of partitioned virtual storage volumes (320) comprises a predetermined size, a predetermined number of input/output operations per second, IOPS, and/or a predetermined read latency.

14. An apparatus (200) for pooling block-level storage volumes (332a; 332b; 332c; 332d) in a third-party cloud computing environment comprising processor circuitry (230) configured to:
obtain a plurality of block-level storage volumes (332a; 332b; 332c; 332d) and at least one computing instance (310) provisioned by the third party cloud computing environment
generate a virtual storage volume (320) based on the plurality of block-level storage volumes (332a; 332b; 332c; 332d) by representing the generated virtual storage volume (320) as a singular block-level storage volume to an operating system of the at least one computing instance (310) in the cloud computing environment;
provide the at least one computing instance (310) access to the generated virtual storage volume (320) via a storage interface protocol.
